# DEMANDE DE BREVET EUROPEEN

(11) **EP 3 282 143 A1**
(43) Date de publication de la demande: **14.02.2018**
(21) Numéro de dépôt: 17180359.6
(22) Date de dépôt: 07.07.2017
(51) Int. Cl.: F16F 15/133, F16F 15/121

(54) **AMORTISSEUR DE VIBRATIONS COMPORTANT UN SUIVEUR DE CAME A ROULEMENT**

(30) Priorité: 08.08.2016 FR 1657644
(71) Demandeur: Valeo Embrayages, 80009 Amiens Cedex 2 (FR)
(72) Inventeur: LOPEZ PEREZ, Carlos, 28947 FUENLABRADA (ES)
(74) Mandataire: Cardon, Nicolas

(57) **Abrégé**

Amortisseur de vibrations (1) pour véhicule automobile, notamment pour une chaine de transmission de véhicule automobile, comportant un premier élément (2) et un second élément (3) mobiles en rotation l'un par rapport à l'autre autour d'un axe X ; et un suiveur de came (13) fixé sur le premier élément et coopérant avec une came se développant autour de l'axe de rotation X (40), le suiveur de came (13) étant agencé pour transmettre un couple entre le premier élément (2) et la came (40) et la came étant agencée pour transmettre le couple entre le suiveur de came (13) et le second élément (3) ; la came (40) étant liée au second élément par une liaison élastique (15) qui est agencée pour se déformer et permettre un déplacement du suiveur de came sur la came et une rotation relative entre les premier et second éléments autour de l'axe de rotation, caractérisé en ce que le premier élément comporte un logement (17) et le suiveur de came (13) comporte une tige (16) dotée d'une portion de fixation (16a) logée à l'intérieur de ce logement, la tige étant fixée au premier élément au moyen d'une soudure (50).

## Description

### Domaine technique

L'invention se rapporte au domaine des amortisseurs de torsion destinés à équiper les transmissions de véhicule automobile.

### Arrière-plan technologique

Les moteurs à explosions ne génèrent pas un couple constant et présentent des acyclismes provoquées par les explosions se succédant dans leurs cylindres. Ces acyclismes génèrent des vibrations qui sont susceptibles de se transmettre à la boîte de vitesses et d'engendrer ainsi des chocs, bruits et nuisances sonores, particulièrement indésirables. Afin de diminuer les effets indésirables des vibrations et améliorer le confort de conduite des véhicules automobiles, il est connu d'équiper les transmissions de véhicule automobile avec des amortisseurs de torsion. De tels amortisseurs de torsion équipent notamment les doubles volants amortisseurs (DVA), les frictions d'embrayage, ou les embrayages de verrouillage, également appelés embrayages « lock-up ».

Le document FR3008152 divulgue un double volant amortisseur comportant un volant d'inertie primaire et un volant d'inertie secondaire mobiles en rotation l'un par rapport à l'autre autour d'un axe de rotation X. Le double volant amortisseur comporte des moyens élastiques d'amortissement qui sont formés de plusieurs lames élastiques montées sur l'un des volants d'inertie et coopérant chacune avec un suiveur de came associé. La flexion des lames élastiques permet d'amortir les vibrations et irrégularités de rotation entre les volants d'inertie primaire et secondaire tout en assurant la transmission du couple.

Chaque suiveur de came doit être fixé avec précision, et de préférence sans nécessiter une opération d'assemblage trop longue ou trop complexe. Par ailleurs, la fixation du suiveur de came doit être suffisamment solide pour pouvoir résister aux forces de rappel élastique des moyens élastiques d'amortissement.

### Résumé

L'invention vise à remédier à ces problèmes en proposant un amortisseur de vibrations dont le suiveur de came est fixé efficacement grâce à une soudure.

Selon un mode de réalisation, l'invention fournit un amortisseur de vibrations pour véhicule automobile, notamment pour une chaine de transmission de véhicule automobile, comportant :
- un premier élément et un second élément mobiles en rotation l'un par rapport à l'autre autour d'un axe *X ;* et
- un suiveur de came fixé sur le premier élément et coopérant avec une came se développant autour de l'axe de rotation *X,* le suiveur de came étant agencé pour transmettre un couple entre le premier élément et la came et la came étant agencée pour transmettre le couple entre le suiveur de came et le second élément; la came étant liée au second élément par une liaison élastique qui est agencée pour se déformer et permettre un déplacement du suiveur de came sur la came et une rotation relative entre les premier et second éléments autour de l'axe de rotation *X* pour amortir les acyclismes entre les premier et second éléments,
caractérisé en ce que le premier élément comporte un logement et le suiveur de came comporte une tige dotée d'une portion de fixation logée à l'intérieur de ce logement, la tige étant fixée au premier élément au moyen d'une soudure située en bordure du logement.
Ainsi, il est possible de fixer rapidement le suiveur de came au premier élément de l'amortisseur tout en proposant une résistance efficace aux efforts de rappels élastiques de la liaison élastique.

Selon d'autres modes de réalisation avantageux, un tel amortisseur de torsion peut présenter une ou plusieurs des caractéristiques suivantes :
- La portion de fixation de la tige est soudée à la bordure du logement.
- La portion de fixation de la tige est ajustée à l'intérieur du logement.

Ainsi, l'orifice reprend efficacement les efforts de rappels élastiques.
- Si on le souhaite, la portion de fixation de la tige est emmanchée à l'intérieur du logement.
- La tige est formée dans un matériau compatible à la soudure, par exemple de l'acier.
- Le premier élément est formé dans un matériau compatible à la soudure, par exemple de l'acier ou une fonte malléable.
- Le premier élément est formé dans une tôle, notamment une tôle en acier.
- La soudure s'étend circonférentiellement autour de la tige. Ainsi, la fixation du suiveur de came est améliorée.
- La tige et le logement s'étendent le long d'un axe *Y* parallèle à l'axe de rotation *X.*
- Le premier élément comporte une première rainure s'étendant circonférentiellement autour de la tige, la soudure étant située au moins en partie dans cette première rainure. Le terme rainure désigne ici une entaille pouvant prendre différentes formes, cela peut être notamment une gorge, un chanfrein...
- La tige présente un axe le long duquel elle s'étend.
- La tige comporte une seconde rainure s'étendant circonférentiellement autour de l'axe de la tige, la soudure étant située au moins en partie dans cette seconde rainure.
- La came s'étend circonférentiellement autour de l'axe de rotation *X,* entre le premier et le second élément, et le logement est un orifice traversant le premier élément entre une première face du premier élément tournée vers la came, et une face opposée du premier élément, tournée dans une direction opposée à la came.
- La soudure est située sur la face opposée du premier élément. Ainsi, la chaleur dégagée par la soudure est plus éloignée de la zone du suiveur de came destinée à coopérer avec la came, cette zone pouvant être sensible, notamment lorsqu'il s'agit d'un roulement lubrifié. Les faces évoquées ici, et notamment la face opposée, ne se limitent pas à des surfaces totalement planes et peuvent inclure notamment des rainures, gorges ou des surfaces coniques correspondant par exemple à des chanfreins.
- Le suiveur de came comporte un galet, coaxial à la tige, le galet étant monté rotatif autour de la tige de manière à rouler sur la came lors d'une rotation relative entre les premier et second éléments.
- Des corps roulants sont disposés dans un espace de roulement contenant un lubrifiant, l'espace de roulement étant arrangé entre une piste de roulement externe portée par le galet et une piste de roulement interne portée par la tige. Ainsi, la rotation relative entre le galet et la tige est favorisée.
- Du côté de la came, le premier élément comporte un lamage, le lamage étant délimité par un rebord externe et le galet est agencé au moins en partie avec jeu à l'intérieur de ce rebord externe.
- Le rebord externe est séparé du pourtour extérieur du galet par un interstice dont la dimension radiale est inférieure à 0.5 mm, de préférence comprise entre 0.3 et 0.1 mm. Ainsi, un interstice présentant de telles dimensions permet d'éviter des fuites de lubrifiant entre le suiveur de came et le premier élément.
- La soudure s'étend circonférentiellement tout autour de l'axe *Y* à l'intérieur de cette première rainure.
- L'orifice traversant du premier élément présente une zone d'entrée située, par rapport au premier élément, du côté de la came, et une zone de sortie située, par rapport au premier élément, du côté opposé à la came, cette zone de sortie présentant la première rainure.
- La première rainure est un chanfrein, ménagé dans le premier élément, bordant la zone de sortie de l'orifice traversant.
- La première rainure et la seconde rainure sont situées en regard l'une de l'autre et la soudure est réalisée dans un canal de soudure formée par la première rainure du premier élément et par la seconde rainure de la tige.
- La soudure est réalisée avec apport de matière dans le canal de soudure ou dans la seconde rainure de la tige ou la première rainure du premier élément.
- un bord de la tige et un bord du logement sont fondus l'un et l'autre au cours d'une opération de soudage sans apport de matière. Par exemple, la soudure est faite par du soudage laser. Ainsi, l'énergie de soudage est concentrée dans la zone de soudure en évitant un apport important d'énergie dans les autres zones du suiveur de came, ce qui serait susceptible de dégrader les performances du suiveur de came, notamment lorsqu'il comporte un galet rotatif et des corps roulants lubrifiés.
- une première extrémité de la tige, située dans la direction opposée à la came, affleure en surface de la face opposée du premier élément. Autrement dit, la tige ne dépasse pas axialement par rapport au premier élément, dans la direction opposée à la came. Ainsi, la soudure est simple à réaliser.
- une première extrémité de la tige située dans la direction opposée à la came, est en saillie par rapport à la face opposée du premier élément, et la seconde rainure est une gorge agencée axialement au regard de la face opposée.
- une première extrémité de la tige située dans la direction opposée à la came, est en saillie par rapport à la face opposée du premier élément, et la seconde rainure est une gorge agencée axialement au regard de la première rainure. Ainsi, le cordon de soudure effectué dans ce canal de soudure bloque très efficacement le suiveur de came dans le sens axial.
- Le suiveur de came comporte une surface d'appui axial en appui contre le premier élément.
- La surface d'appui axial s'étend circonférentiellement autour de la tige.
- La surface d'appui peut être formée par un épaulement sur la tige ou une bague enserrant la tige.
- La surface d'appui axial du suiveur de came est en appui contre la première face du premier élément.
- La tige comporte une extrémité distale opposée à la première extrémité, la came étant située axialement entre l'orifice et l'extrémité distale de la tige.
- le galet est retenu axialement entre un collet formé sur l'extrémité distale libre de la tige en faisant saillie radialement et une bague de retenue, la bague de retenue étant montée sur la tige en appui axial en direction de l'extrémité distale de la tige contre un épaulement ménagé sur la tige.
- la bague de retenue est bloquée axialement entre la première face du premier élément et l'épaulement ménagé sur la tige.
- le galet comporte un pourtour interne présentant un premier épaulement et un second épaulement ménagés respectivement de part et d'autre de la piste de roulement externe et coopérant respectivement avec le collet et la bague de retenue de manière à limiter le mouvement axial du galet.
- le suiveur de came comporte une rondelle d'étanchéité qui comporte un bord externe fixée de manière étanche au galet et un bord interne coopérant de manière étanche avec la bague de retenue.
- l'un des premier et second éléments est un volant primaire d'un double volant amortisseur destiné à être fixé à une vilebrequin du moteur à combustion et l'autre des premier et second éléments est un volant secondaire du double volant amortisseur.
- le premier élément est un volant primaire d'un double volant amortisseur destiné à être fixé à un vilebrequin du moteur à combustion et le second élément est un volant secondaire du double volant amortisseur, le volant primaire étant formé dans une tôle d'acier emboutie.
- le volant primaire est formé dans une tôle d'acier emboutie.

Selon un mode de réalisation, l'invention fournit également une chaîne de transmission et un véhicule automobile comportant un tel amortisseur de vibrations.

L'invention porte également sur un procédé de fixation d'un suiveur de came sur un premier élément d'un amortisseur de torsion, le premier élément étant apte à être monté en rotation avec un second élément de l'amortisseur de manière à tourner l'un par rapport à l'autre autour d'un axe de rotation *X ;* le procédé comportant les étapes suivantes
- fournir un premier élément, le premier élément comprenant un logement,
- fournir un suiveur de came comportant une tige,
- insérer la tige du suiveur de came dans le logement, de sorte que le suiveur de came soit apte à coopérer avec une came liée au second élément par une liaison élastique,
- réaliser une soudure entre le premier élément et la tige, en bordure du logement, pour fixer le suiveur de came au premier élément.

Le procédé peut comporter également les caractéristiques suivantes :
- le suiveur de came comporte une face d'appui axial, et le procédé comporte en outre, avant la réalisation de la soudure, l'étape de plaquer la surface d'appui axial du suiveur de came en appui contre le premier élément.
- le logement est un orifice traversant le premier élément depuis une première face destinée à être tournée vers la came jusqu'à une face opposée, et l'étape de soudure étant réalisée sur la face opposée entre la bordure de l'orifice traversant et la tige. Ainsi, la partie du suiveur de came destinée à coopérer avec la came ne fait pas obstacle lors de l'opération de soudure et la chaleur dégagée par la soudure est plus éloignée de la zone du suiveur de came destinée à coopérer avec la came, cette zone pouvant être sensible, notamment lorsqu'il s'agit d'un roulement lubrifié.

### Brève description des figures

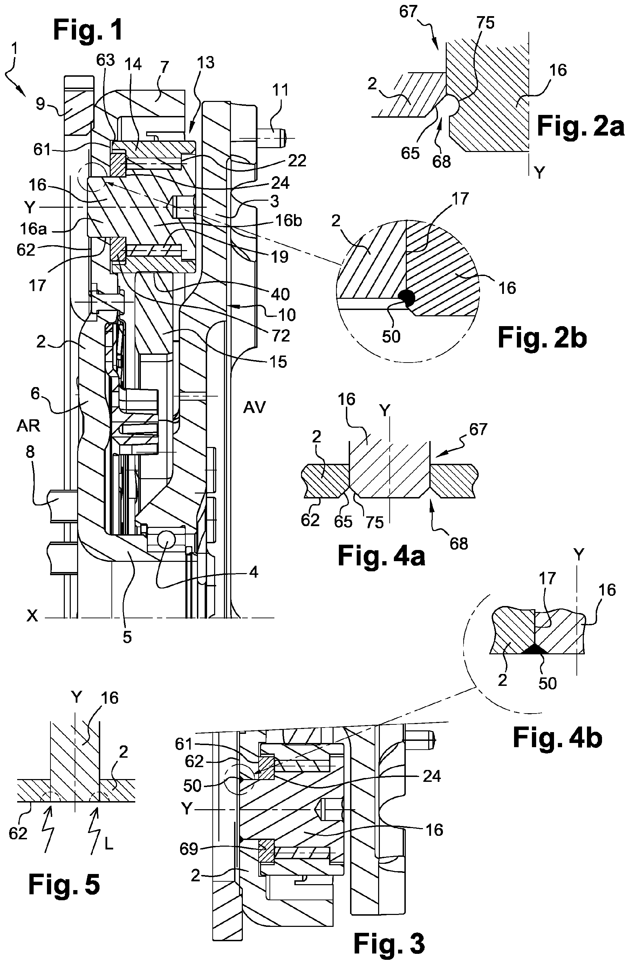

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
**La** **figure 1** est une vue en coupe d'un double volant amortisseur selon un premier mode de réalisation de l'invention
**La** **figure 2A** est une vue partielle en coupe de la figure 1 avant l'opération de soudure.
**La** **figure 2B** est une vue partielle en coupe de la figure 1 après l'opération de soudure.
**La** **figure 3** est une vue partielle en coupe d'un double volant amortisseur selon un second mode de réalisation de l'invention.
**La** **figure 4A** est une vue partielle en coupe de la figure 3 avant l'opération de soudure.
**La** **figure 4B** est une vue partielle en coupe de la figure 3 après l'opération de soudure.
**La** **figure 5** représente une vue partielle en coupe d'un autre mode de réalisation.

### Description détaillée de modes de réalisation

Dans la description et les revendications, on utilisera, les termes "externe" et "interne" ainsi que les orientations "axiale" et "radiale" pour désigner, selon les définitions données dans la description, des éléments de l'amortisseur de vibrations. Par convention, l'axe *X* de rotation de l'amortisseur de vibrations détermine l'orientation axiale. Par ailleurs, lorsque l'on désigne un élément d'un suiveur de came, l'orientation "radiale" est dirigée orthogonalement à l'axe *Y* de rotation du galet du suiveur de came. Néanmoins, lorsque l'on désigne tout autre élément de l'amortisseur de vibrations, l'orientation "radiale" est dirigée orthogonalement à l'axe *X* de rotation de l'amortisseur de vibrations. Un élément proche du l'axe en cause est qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé plus proche du moteur thermique étant désigné par arrière et un élément destiné à être placé plus proche de la boîte de vitesses étant désigné par avant.

L'amortisseur de vibrations est destiné à être disposé dans la chaîne de transmission d'un véhicule automobile, entre le moteur et la boîte de vitesses. Il peut notamment être intégré à un double volant amortisseur, tel qu'illustré sur les figures annexées, ou à un disque d'embrayage.

En relation avec les figures 1 à 5, l'on observe un double volant amortisseur 1 comprenant un volant d'inertie primaire 2, destiné à être fixé au bout d'un vilebrequin d'un moteur à combustion interne, non représenté, et un volant d'inertie secondaire 3 qui est centré et guidé sur le volant primaire 2 au moyen d'un palier 4, tel qu'un palier à roulement à billes. Le volant secondaire 3 est destiné à former le plateau de réaction d'un embrayage, non représenté, relié à l'arbre d'entrée d'une boîte de vitesses. Les volants primaire 2 et secondaire 3 sont destinés à être montés mobiles autour d'un axe de rotation X et sont, en outre, mobiles en rotation l'un par rapport à l'autre autour dudit axe *X.*

Le volant primaire 2 comporte un moyeu 5 radialement interne supportant le palier 4, une portion annulaire 6 s'étendant radialement depuis le moyeu 5 et un rebord externe 7, s'étendant axialement vers l'avant depuis la périphérie externe de la portion annulaire 6. Le volant primaire 2 est pourvu d'orifices permettant le passage de vis de fixation 8, illustrées sur la figure 1, destinées à la fixation du volant primaire 2 sur le vilebrequin du moteur. Le volant primaire 2 porte, sur sa périphérie extérieure, une couronne dentée 9 pour l'entraînement en rotation du volant primaire 2, à l'aide d'un démarreur.

Le volant secondaire 3 comporte une surface annulaire plane 10, tournée vers l'avant, destinée à former une surface d'appui pour une garniture de friction d'un disque d'embrayage, non représenté. Le volant secondaire 3 comporte, à proximité de son bord externe, des plots 11 et des orifices, non représentés, servant au montage d'un couvercle du dispositif d'embrayage. Le volant secondaire 3 comporte en outre des orifices, non représentés, disposés en vis-à-vis des orifices formés dans le volant primaire 2, et destinés au passage des vis de fixation 8, lors du montage du double volant amortisseur 1 sur le vilebrequin.

En relation avec la figure 1, l'on observe que le double volant amortisseur 1 comporte des éléments suiveurs de came 13 qui sont fixés sur le volant primaire 2 et présentent chacun un galet 14 monté mobile en rotation sur le volant primaire 2 autour d'un axe de rotation *Y.* Chaque galet 14 coopère avec une surface de came 40 portée par une lame élastique 15 fixée sur le volant secondaire 3. Les galets 14 sont disposés radialement à l'extérieur de leur surface de came respective de sorte à maintenir radialement les lames élastiques 15 lorsqu'elles sont soumises à la force centrifuge. Les galets 14 sont agencés pour rouler contre ladite surface de came 40 lors d'un mouvement relatif entre les volants primaire 2 et secondaire 3. Chaque surface de came 40 est agencée de telle sorte que, pour une rotation relative entre le volant primaire 2 et le volant secondaire 3 dans un sens ou dans l'autre, par rapport à une position angulaire relative de repos, le galet 14 se déplace sur la surface de came 40 et, ce faisant, exerce un effort de flexion sur la lame élastique 15. Par réaction, la lame élastique 15 exerce sur le galet 14 une force de rappel ayant une composante circonférentielle qui tend à ramener les volants primaire 2 et secondaire 3 vers leur position angulaire relative de repos. Ainsi, les lames élastiques 15 sont aptes à transmettre un couple entraînant du volant primaire 2 vers le volant secondaire 3 (sens direct) et un couple résistant du volant secondaire 3 vers le volant primaire 2 (sens rétro). Par ailleurs, les vibrations de torsion et les irrégularités de couple qui sont produites par le moteur et transmises par l'arbre de vilebrequin au volant primaire 2 sont amorties par la flexion des lames élastiques 15 sur un plan perpendiculaire à l'axe de rotation *X.* Pour plus de détails quant au fonctionnement et à la structure des lames élastiques 15, on pourra notamment se reporter aux documents FR3000155, FR3002605 et FR3008152.

On observe notamment sur la figure 1 que chaque suiveur de came 13 comprend une tige 16 qui comporte une portion de fixation 16a, montée dans un orifice 17 ménagé dans la portion annulaire 6 du volant primaire 2. La portion de fixation 16a est ajustée dans ledit orifice 17. Si on le souhaite, elle peut être emmanchée en force dans l'orifice. Dans le mode de réalisation représenté sur la figure 1, l'extrémité de la portion de fixation 16a débouche au-delà de la portion annulaire, côté moteur. Le suiveur de came 13 comporte un galet 14, coaxial à la tige 16, le galet étant monté rotatif autour de la tige 16 de manière à rouler sur la came 40 lors d'une rotation relative entre les premier 2 et second éléments 3. La tige 16 comporte une portion 16b qui fait saillie vers l'avant, en direction du volant secondaire 3, le galet étant monté rotatif autour de cette portion 16b.

De façon à réduire les frottements parasitaires, le galet 14 est monté en rotation sur la tige 16 par l'intermédiaire d'une pluralité de corps roulants 19. Les corps roulants 19 sont par exemple des billes, des rouleaux ou des aiguilles, comme dans le mode de réalisation représenté. Les corps roulants 19 sont disposés dans un espace de roulement qui est formé entre une piste de roulement externe qui est ménagée sur le pourtour interne du galet 14 et une piste de roulement interne qui est ménagée sur le pourtour externe de la portion en saillie 16b de la tige.

Les corps roulants 19 sont maintenus axialement à l'intérieur de l'espace de roulement au moyen, d'une part, d'un collet 22 formé à l'extrémité distale de la tige 16, et d'autre part, d'une bague de retenue 72 montée sur la tige 16. Le collet 22 fait saillie radialement vers l'extérieur depuis l'extrémité distale de la portion 16b de la tige. La bague de retenue 72 est maintenue axialement entre, d'une part, la portion annulaire 6 du volant primaire 2 et, d'autre part, un épaulement 24 formé sur la tige 16 et bordant la piste de roulement interne, vers l'arrière.

Par ailleurs, le pourtour interne du galet 14 comporte un épaulement avant et un épaulement arrière ménagés respectivement de part et d'autre de la piste de roulement externe et coopérant respectivement avec le collet 22 et la bague de retenue 72 de manière à limiter le mouvement axial du galet 14 par rapport à la tige 16.

L'espace de roulement est rempli d'un lubrifiant, tel que de la graisse. Afin de maintenir le lubrifiant à l'intérieur de l'espace de roulement, notamment lorsque le suiveur de came 13 est soumis à la force centrifuge, le suiveur de came 13 est équipé de moyens d'étanchéité.

L'amortisseur de vibrations comporte donc :
- un premier élément 2 et un second élément 3 mobiles en rotation l'un par rapport à l'autre autour d'un axe *X ;* et
- un suiveur de came 13 fixé sur le premier élément 2 et coopérant avec une came 40 se développant autour de l'axe de rotation *X,* le suiveur de came étant agencé pour transmettre un couple entre le premier élément et la came 40 et la came 40 étant agencée pour transmettre le couple entre le suiveur de came 13 et le second élément 3; la came 40 étant liée au second élément par une liaison élastique 15 qui est agencée pour se déformer et permettre un déplacement du suiveur de came sur la came et une rotation relative entre les premier et second éléments autour de l'axe de rotation *X* pour amortir les acyclismes entre les premier et second éléments.

Le premier élément 2, formé ici par le volant primaire 2, comporte un logement 17 et le suiveur de came 13 comporte une tige 16 dotée d'une portion de fixation 16a logée à l'intérieur de ce logement 17. La tige est fixée au volant primaire 2 au moyen d'une soudure 50 située en bordure du logement 17. Ainsi, il est possible de fixer rapidement le suiveur de came au volant primaire de l'amortisseur tout en proposant une résistance efficace aux efforts de rappels élastiques exercés par la liaison élastique 15.

La portion de fixation 16a de la tige 16 est ajustée à l'intérieur du logement 17. Ainsi, les parois de l'orifice reprennent efficacement les efforts de rappels élastiques. Si on le souhaite, la portion de fixation 16a de la tige 16 est emmanchée à force à l'intérieur du logement 17.

La tige 16 est formée dans un matériau compatible à la soudure, par exemple de l'acier. Le volant d'inertie primaire 2 est formé également dans un matériau compatible à la soudure, par exemple de l'acier ou une fonte malléable. Dans le mode de réalisation représenté sur la figure 1, le volant primaire est formé dans une tôle en acier emboutie. La solution proposée s'avère alors particulièrement simple à réaliser, robuste, et peu couteuse.

Pour améliorer la fixation du suiveur de came, la soudure 50 s'étend circonférentiellement autour de la tige 16.

La tige 16 et le logement 17 s'étendent le long d'un axe *Y* parallèle à l'axe de rotation *X.*

La came 40 s'étend circonférentiellement autour de l'axe de rotation *X,* entre les volants primaire et secondaire, et le logement 17 est un orifice traversant le volant primaire 2 entre une première face 61 du volant primaire 2 tournée vers la came 40 jusqu'à une face opposée 62 du volant primaire 2, tournée dans une direction opposée à la came 40.

La tige 16 s'étend axialement à l'intérieur de l'orifice traversant jusqu'à la face opposée 62. La soudure 50 est réalisée de préférence sur la face opposée 62 du volant primaire. Ainsi, la chaleur dégagée par la soudure est plus éloignée de la zone du suiveur de came destinée à coopérer avec la came, cette zone pouvant être sensible, notamment lorsqu'il s'agit d'un roulement lubrifié. Les faces évoquées ici, et notamment la face opposée, ne se limitent pas à des surfaces totalement planes et peuvent inclure notamment des rainures, gorges ou des surfaces coniques correspondant par exemple à des chanfreins.

Du côté de la came 40, le premier élément comporte un lamage, le lamage étant délimité par un rebord externe 63 et le galet 14 est agencé au moins en partie avec jeu à l'intérieur de ce rebord externe 63. Le rebord externe 63 est séparé du pourtour extérieur du galet 14 par un interstice dont la dimension radiale est inférieure à 0.5 mm, de préférence comprise entre 0.3 et 0.1 mm. Ainsi, un interstice présentant de telles dimensions permet d'éviter des fuites de lubrifiant entre le suiveur de came et le premier élément.

Sur la figure 2a est représentée une vue partielle de la tige 16 dans l'orifice 17 du volant primaire 2 avant l'opération de soudure. On voit que le volant primaire comporte une première rainure 65 s'étendant circonférentiellement autour de l'axe *Y,* la soudure 50 étant destinée à être située au moins en partie dans cette première rainure. Le terme rainure désigne ici une entaille pouvant prendre différentes formes, il s'agit ici d'un chanfrein.

Sur la figure 2b est représentée une vue partielle de la tige 16 dans l'orifice 17 du volant primaire 2 après l'opération de soudure. On voit que la soudure 50, réalisée ici avec apport de matière, s'étend circonférentiellement tout autour de l'axe *Y* en partie à l'intérieur de cette première rainure.

L'orifice traversant 17 du premier élément présente une zone d'entrée 67 située, par rapport au volant primaire 2, du côté de la came 40, et une zone de sortie 68 située, par rapport au volant primaire 2, du côté opposé à la came 40, cette zone de sortie 68 présentant la première rainure 65.

Comme on le voit sur la figure 2a, la première rainure 65 peut être un chanfrein, ménagé dans le volant primaire 2, et bordant la zone de sortie 68 de l'orifice traversant 17.

La tige 16 comporte une seconde rainure 75 s'étendant circonférentiellement autour de l'axe *Y.* La soudure 50 est située en partie dans cette seconde rainure 75.

On voit sur la figure 2a que la première rainure 65 et la seconde rainure 75 sont situées en regard l'une de l'autre et la soudure 50 est réalisée dans un canal de soudure formé par la première rainure 65 du volant primaire 2 et par la seconde rainure 75 de la tige 16. La soudure 50 est réalisée avec apport de matière dans le canal de soudure.

Selon d'autres modes de réalisation non représentés, cette soudure peut être faite uniquement dans une rainure de la tige adjacente au volant primaire ou dans une rainure du volant primaire adjacente à la tige.

Une première extrémité de la tige, située axialement dans la direction opposée à la came 40, est en saillie par rapport à la face opposée 62 du volant primaire 2. La seconde rainure 75 est une gorge agencée axialement au regard de la face opposée et de la première rainure 65.

Selon un second mode de réalisation représenté sur les figures 3, 4a, et 4b, la première extrémité de la tige, située axialement dans la direction opposée à la came 40, affleure en surface de la face opposée 62 du volant primaire. Autrement dit, la tige 16 ne dépasse pas axialement par rapport au volant primaire 2, dans la direction axiale opposée à la came 40. Ainsi, la soudure est simple à réaliser.

Selon un autre mode de réalisation représenté sur la figure 5, l'opération de soudage peut être réalisée sans apport de matière, par exemple par laser. Ainsi, l'énergie de soudage est concentrée dans la zone de soudure en évitant un apport important d'énergie dans les autres zones du suiveur de came, ce qui serait susceptible de dégrader les performances du suiveur de came, notamment lorsqu'il comporte un galet rotatif et des corps roulants lubrifiés.

Pour ce faire, un bord de la tige 16 et un bord du logement 17 sont fondus l'un et l'autre au cours de l'opération de soudage sans apport de matière. Ce mode de réalisation ne nécessite pas de rainures.

Dans ces différents modes de réalisation, le suiveur de came 13 comporte une surface d'appui axial 69 en appui contre le volant primaire 2. La surface d'appui axial 69 s'étend circonférentiellement autour de la tige 16. Cette surface d'appui 69 peut être formée par un épaulement sur la tige ou une bague 72 enserrant la tige 16. La surface d'appui axial 69 du suiveur de came est en appui contre la première face 61 du volant primaire tournée axialement vers la came 40.

La bague de retenue 72 est bloquée axialement entre la première face 61 du volant primaire et l'épaulement 24 ménagé sur la tige 16.

Selon un mode de réalisation, l'invention fournit également une chaîne de transmission et un véhicule automobile comportant un tel amortisseur de vibrations.

L'invention porte également sur un procédé de fixation d'un suiveur de came 13 sur un volant primaire 2 d'un double volant amortisseur de torsion, le volant primaire étant apte à être monté en rotation avec un volant secondaire de l'amortisseur de manière à tourner l'un par rapport à l'autre autour d'un axe de rotation *X ;* le procédé comportant les étapes suivantes :
- fournir un volant primaire 2, le volant primaire comprenant un logement 17,
- fournir un suiveur de came 13 comportant une tige 16,
- insérer la tige 16 du suiveur de came 13 dans le logement 17, de sorte que le suiveur de came 13 soit apte à coopérer avec une came 14 liée au volant secondaire 3 par une liaison élastique 15,
- réaliser une soudure 50 entre le volant primaire 2 et la tige 16, en bordure du logement 17, pour fixer le suiveur de came 13 au volant primaire.

Le procédé peut comporter également les caractéristiques suivantes :
- le suiveur de came 13 comporte une face d'appui axial 69, et le procédé comporte en outre, avant la réalisation de la soudure 50, l'étape de plaquer la surface d'appui axial du suiveur de came en appui contre le volant primaire 2.
- le logement 17 est un orifice traversant le premier élément depuis une première face destinée à être tournée vers la came jusqu'à une face opposée, et l'étape de soudure étant réalisée sur la face opposée entre la bordure de l'orifice traversant et la tige 16. Ainsi, la partie du suiveur de came destinée à coopérer avec la came ne fait pas obstacle lors de l'opération de soudure et la chaleur dégagée par la soudure est plus éloignée de la zone du suiveur de came destinée à coopérer avec la came, cette zone pouvant être sensible, notamment lorsqu'il s'agit d'un roulement lubrifié.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Amortisseur de vibrations (1) pour véhicule automobile, notamment pour une chaine de transmission de véhicule automobile, comportant :
- un premier élément (2) et un second élément (3) mobiles en rotation l'un par rapport à l'autre autour d'un axe *X ;* et
- un suiveur de came (13) fixé sur le premier élément et coopérant avec une came se développant autour de l'axe de rotation *X* (40), le suiveur de came (13) étant agencé pour transmettre un couple entre le premier élément (2) et la came (40) et la came étant agencée pour transmettre le couple entre le suiveur de came (13) et le second élément (3) ; la came (40) étant liée au second élément par une liaison élastique (15) qui est agencée pour se déformer et permettre un déplacement du suiveur de came sur la came et une rotation relative entre les premier et second éléments autour de l'axe de rotation *X* pour amortir les acyclismes entre les premier et second éléments,
**caractérisé en ce que** le premier élément comporte un logement (17) et le suiveur de came (13) comporte une tige (16) dotée d'une portion de fixation (16a) logée à l'intérieur de ce logement, la tige étant fixée au premier élément au moyen d'une soudure (50) située en bordure du logement (17).

2. Amortisseur selon la revendication 1, dans lequel la soudure (50) s'étend circonférentiellement autour de la tige (16).

3. Amortisseur selon l'une des revendications précédentes dans lequel la tige (16) et le logement (17) s'étendent le long d'un axe Y parallèle à l'axe de rotation *X.*

4. Amortisseur selon l'une des revendications précédentes dans lequel la came (40) s'étend circonférentiellement autour de l'axe de rotation *X,* entre le premier et le second élément, et le logement (17) est un orifice traversant le premier élément entre une première face (61) du premier élément tournée vers la came, et une face opposée (62) du premier élément, tournée dans une direction opposée à la came (40), la soudure (50) étant située sur la face opposée (62) du premier élément.

5. Amortisseur selon l'une des revendications précédentes dans lequel le suiveur de came (13) comporte un galet (14), coaxial à la tige (16), le galet étant monté rotatif autour de la tige (16) de manière à rouler sur la came (40) lors d'une rotation relative entre les premier (2) et second éléments (3).

6. Amortisseur selon l'une des revendications précédentes dans lequel le premier élément comporte une première rainure (65) s'étendant circonférentiellement autour de la tige (16), la soudure (50) étant située au moins en partie dans cette première rainure (65).

7. Amortisseur selon l'une des revendications précédentes, dans lequel la tige (16) comporte une seconde rainure (75) s'étendant circonférentiellement autour de l'axe de la tige, la soudure (50) étant située au moins en partie dans cette seconde rainure (75).

8. Amortisseur selon la revendication 6 combinée à la revendication 7, dans lequel la première rainure (65) et la seconde rainure (75) sont situées en regard l'une de l'autre et la soudure (50) est réalisée dans un canal de soudure formée par la première rainure du premier élément et par la seconde rainure de la tige.

9. Amortisseur selon l'une des revendications 6 à 8, dans lequel la soudure (50) est réalisée avec apport de matière dans le canal de soudure ou dans la seconde rainure de la tige ou la première rainure du premier élément.

10. Amortisseur selon l'une des revendications 1 à 8, dans lequel un bord de la tige (16) et un bord du logement (17) sont fondus l'un et l'autre au cours d'une opération de soudage sans apport de matière.

11. Amortisseur selon la revendication 4, pouvant être prise en combinaison avec l'une des revendications 5 à 10, dans lequel une première extrémité de la tige, située dans la direction opposée à la came, affleure en surface de la face opposée du premier élément.

12. Amortisseur selon la revendication 4, pouvant être prise en combinaison avec l'une des revendications 5 à 10, dans lequel une première extrémité de la tige située dans la direction opposée à la came, est en saillie par rapport à la face opposée du premier élément, et la seconde rainure est une gorge agencée axialement au regard de la première rainure.

13. Amortisseur selon l'une quelconque des revendications précédentes, dans lequel l'un des premier et second éléments est un volant primaire (2) d'un double volant amortisseur (1) destiné à être fixé à une vilebrequin du moteur à combustion et l'autre des premier et second éléments est un volant secondaire (3) du double volant amortisseur (1).

14. Amortisseur selon l'une des revendications précédentes, dans lequel le premier élément est un volant primaire d'un double volant amortisseur destiné à être fixé à un vilebrequin du moteur à combustion et le second élément est un volant secondaire du double volant amortisseur, le volant primaire étant formé dans une tôle d'acier emboutie.
